# EUROPÄISCHE PATENTANMELDUNG

(11) **EP 1 912 114 A2**
(43) Veröffentlichungstag der Anmeldung: **16.04.2008**
(21) Anmeldenummer: 07115684.8
(22) Anmeldetag: 05.09.2007
(51) Int. Cl.: G06F 3/048

(54) **Bedieneinheit und Verfahren zur Darstellung eines Tastenfeldes**

(30) Priorität: 09.10.2006 DE 102006047653
(71) Anmelder: ROBERT BOSCH GMBH, 70442 Stuttgart (DE)
(72) Erfinder: Flick, Bernd, 31199, Diekholzen (DE); Dahlhoff, Achim, 31141, Hildesheim (DE); Reinhard, Oliver, 80992, München (DE); Koss, Sebastian, 30167, Hannover (DE)

(57) **Zusammenfassung**

Die Erfindung betrifft eine Bedieneinheit mit einer Anzeigeeinheit zur Darstellung einer Bcdicnflächc mit mchrcn, in der Anzeigeeinheit dargestellten Bedienfeldern und mit einer Erfassungseinheit zur Erfassung einer Annäherung eines Bedienelements und zur örtlichen Zuordnung der Annäherung zu einem der Bedienfelder, dadurch gekennzeichnet, dass dasjenige Bedienfeld (43, 43'), das der Annäherung zugeordnet wird, gegenüber allen Bedienfeldern (41, 45, 47) in seiner Umgebung vergrößert in der Anzeigeeinheit (3, 30) dargestellt wird.

## Beschreibung

### Stand der Technik

Die Erfindung geht aus von einer Bedieneinheit oder einem Verfahren zur Darstellung eines Tastenfeldes nach Gattung der unabhängigen Ansprüche. Aus der WO 2004/051392 A2 ist bereits eine Benutzerschnittstelle mit einer Touch-Screen-Bedienung bekannt, bei der in einer berührungsempfindlichen Anzeigefläche ein Buchstabenfeld dargestellt ist. Bei einer Berührung eines Bereichs der Anzeigefläche, dessen Position einem der Buchstaben zugeordnet ist, wird der entsprechende Buchstabe eingegeben. Um die Eingabe zu erleichtern, ist ein weiterer Anzeigebereich vorgesehen, in dem eine Umgebung der Taste, der sich ein Benutzer mit seiner Hand nähert, vergrößert dargestellt wird, wobei dieser Bereich eine Umgebung und diejenige Taste einschließt, an die sich der Benutzer mit seiner Hand annähert. Diejenige Taste, zu der die Annäherung am größten ist, wird in einer anderen Farbe in dem vergrößerten Ausschnitt der Tastatur dargestellt.

### Vorteile der Erfindung

Die erfindungsgemäße Bedieneinheit mit den Merkmalen des unabhängigen Anspruchs hat demgegenüber den Vorteil, dass durch die vergrößerte Darstellung desjenigen Bedienfeldes, an das sich der Benutzer annähert, eine leichte Bedienbarkeit der Bedieneinheit gewährleistet wird. Denn durch die Vergrößerung nur desjenigen Bedienfelds, an das sich der Benutzer annähert, kann die Bedienung der Bedieneinheit vereinfacht werden. Denn statt eine Vielzahl von Bedientasten vergrößert darzustellen, wird insbesondere diejenige Bedientaste vergrößert, bei der eine Auslösung in Folge der größten Annäherung am Wahrscheinlichsten ist. Somit kann nicht nur die Ablesbarkeit einer Beschriftung, die bevorzugt mit vergrößert wird, sondern auch eine Berührung durch eine vergrößerte, dem Bedienfeld zugeordnete Fläche in der Anzeigeeinheit verbessert werden. Zudem kann die Vergrößerung auch in demjenigen Anzeigebereich erfolgen, in dem das Bedienfeld ohne eine erfasste Annäherung in der Anzeigeeinheit ohne Vergrößerung angeordnet war. Somit kann auf eine zusätzliche Anzeigefläche zur Darstellung einer Vergrößerung von Bedienfeldern verzichtet werden.

Das erfindungsgemäße Verfahren zur Darstellung eines Tastenfelds in einer Berührungs-und /oder annäherungsempfindlichen Anzeigeeinheit ermöglicht es ebenfalls, die Ablesbarkeit bzw. die Bedienbarkeit einer entsprechenden Berührungs- und/oder annäherungsempfindlichen Anzeigeeinheit zu vereinfachen.

Durch die in den abhängigen Ansprüchen aufgeführten Maßnahmen sind vorteilhafte Weiterbildungen und Verbesserungen der in den unabhängigen Ansprüchen angegebenen Bedieneinheit bzw. des Verfahrens möglich. Besonders vorteilhaft ist es, eine Zeitschaltung zur Überwachung einer Annäherung an ein Bedienfeld vorzusehen, um dem Benutzer bei Bedarf, also bei einer möglichen Unschlüssigkeit des Benutzers, zusätzliche Informationen auszugeben. So ist es beispielsweise möglich, entweder ein weiteres Informations-Anzeigefeld in der Anzeigeeinheit darzustellen oder einen Bedienhinweis akustisch an den Benutzer auszugeben. Der Aufruf einer Benutzerunterstützung ist somit ohne eine gesonderte Auswahl einer solchen Benutzerunterstützung möglich.

Ferner ist es vorteilhaft, eine einem Bedienfeld zugeordnete Funktion bei einer weiteren Annäherung oder gegebenenfalls auch erst bei einer Berührung der Anzeigeeinheit auszulösen. Somit kann auf die Anordnung weiterer Bedienelemente zur Durchführung des Auslösens einer entsprechenden Funktion verzichtet werden.

Ferner ist es vorteilhaft, die Darstellung des Bedienfeldes bei einer weiteren Annäherung auch weiter zu vergrößern. Der Benutzer kann somit bereits durch die zunehmende Vergrößerung erkennen, welcher Funktion er sich annähert. Insbesondere bei einer Verwendung in einem Fahrzeug ist es dadurch möglich, dass beispielsweise Erschütterungen während einer Fahrt, die möglicherweise kurz vor Berühren einer Anzeigefläche zu einem Verwackeln und damit zu einer Fehlauslösung einer Funktion führen können, keinen schädlichen Einfluss auf eine Bedienung haben. Denn durch die zunehmende Vergrößerung bei besonders großer Annäherung ist die einem Bedienfeld zugeordnete Fläche und damit diejenige Fläche, die für ein Auslösen einer Funktion zur Verfügung steht, besonders groß.

Weiterhin ist es vorteilhaft, auch diejenigen Bedienfelder in der Umgebung des vergrößerten Bedienfeldes zumindest gegenüber anderen Bedienfeldern zu vergrößern. Sollte ein Benutzer irrtümlich sich nicht korrekt einem Bedienfeld angenähert haben, so ist es ihm durch die Vergrößerung der in der Umgebung des noch stärker vergrößerten Bedienfeldes angeordneten, weiteren Bedienfelder möglich, leicht zu einem dieser Bedienfelder zu wechseln.

Es ist ferner vorteilhaft, Bedienfelder in Nachbarschaft zu dem vergrößert dargestellten Bedienfeld in ihrer Position in der Anzeigeeinheit zu verschieben. Hierdurch kann in dem Bereich der Annäherung Platz geschaffen werden, um sowohl das vergrößerte Bedienfeld, aber auch gegebenenfalls andere Bedienfelder in der unmittelbaren Nachbarschaft vergrößert anzuzeigen. Insbesondere können hierdurch Abstände zwischen den einzelnen Bedienfeldern, die zur Unterscheidung einer Annäherung zu einem der Bedienfelder dienen, teilweise beibehalten werden.

Es ist weiterhin vorteilhaft, bei einer weiteren Annäherung bzw. bei einer Berührung des entsprechenden Bedienfeldes die zugeordnete Funktion auszulösen, da hierdurch eine besonders einfache, intuitive Bedienung ähnlich tatsächlich vorhandener Tasten ermöglicht wird.

Ferner ist es vorteilhaft, eine Farbe eines Bedienfeldes in Abhängigkeit von einer Annäherung zu verändern, um neben der Vergrößerung einem Benutzer zusätzlich deutlich zu machen, welchem Bedienfeld er sich annähert.

### Kurze Beschreibung der Zeichnungen

Ausführungsbeispiele der Erfindung sind in den Zeichnungen dargestellt und in der nachfolgenden Beschreibung näher erläutert. Es zeigen Figur 1 ein Ausführungsbeispiel für eine erfindungsgemäße Bedieneinheit bei der Verwendung zur Steuerung einer Fahrinformationseinrichtung in einem Kraftfahrzeug, Figuren 2 bis 4 eine erfindungsgemäße Bedieneinheit in einer Aufsicht und in einer Seitenansicht mit einem sich der Anzeigeeinheit nähernden Bedienelement in den Figuren 3 und 4.

### Ausführungsformen der Erfindung

Die erfindungsgemäße Bedieneinheit und das erfindungsgemäße Verfahren zur Darstellung des Bedienfeldes können für beliebige elektronische Geräte verwendet werden. Insbesondere ist die Verwendung vorteilhaft für derartige Bedienfläche, bei denen nur wenig Platz zur Verfügung steht. Dies ist beispielsweise bei tragbaren Kleincomputern der Fall, bei denen eine große Bildschirmoberfläche einer leichten Transportierbarkeit gegenübersteht. Ferner finden kleine Bildschirmflächen auch in Fahrzeugen Verwendung, da hier nur ein beschränkter Einbauplatz zur Verfügung steht. Zugleich sind aber insbesondere während der Fahrt oder auch vor der Fahrt komplexe Bedienungen erforderlich, die eine Auswahl aus einer Vielzahl von Optionen erfordern. Im Folgenden ist die vorliegende Erfindung daher am Beispiel einer Fahrerinformationseinrichtung in einem Kraftfahrzeug erläutert.

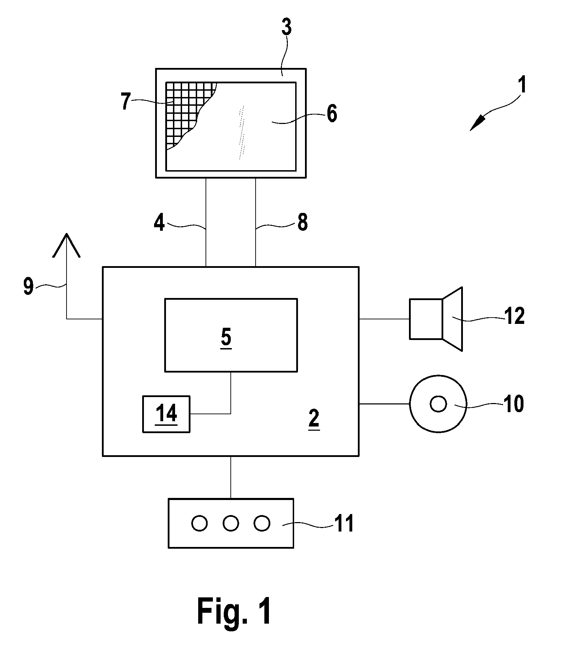

In der Figur 1 ist eine Fahrerinformationseinrichtung 1 gezeigt, die über eine Zentraleinheit 2 verfügt, an die eine Anzeigeeinheit 3 angeschlossen ist. Über eine Datenleitung 4 werden Anzeigedaten an die Anzeigeeinheit 3 ausgegeben. Die Anzeigedaten werden von einer Recheneinheit 5 bereitgestellt. Die Anzeigeeinheit 3 ist bevorzugt als eine Flüssigkristallanzeige ausgeführt. Es ist aber auch möglich, andere Anzeigearten, insbesondere Matrixanzeigen, wie eine OLED-Anzeige, aber auch eine Kathodenstrahlröhrenanzeige zu verwenden. Die Anzeigeeinheit 3 ist mit einer Erfassungseinrichtung 6 ausgestattet, die beispielsweise über kapazitive Erfassungselemente 7, die zeilenweise und spaltenweise über die Anzeigefläche der Anzeigeeinheit 3 gelegt sind, eine Annäherung räumlich zugeordnet zu Positionen in der Anzeigefläche der Anzeigeeinheit 3 erfassen. Hierbei kann beispielsweise die Annäherung einer Hand eines Benutzers, aber auch die Annäherung eines Tastelements, wie beispielsweise eines Taststiftes, erfasst werden. Eine entsprechende Ortsinformation über eine größte Annäherung wird über eine Datenleitung 8 an die Zentraleinheit 2 weitergeleitet und von der Recheneinheit 5 verarbeitet. In einer weiteren Ausführungsform kann getrennt hiervon durch die Erfassungseinrichtung 6 auch eine Berührung der Fläche der Anzeigeeinheit 3 erfasst werden.

Die Zentraleinheit 2 ist beispielsweise als eine Navigationsvorrichtung und/oder eine Autoradioeinheit in dem Fahrzeug ausgeführt. Sie verfügt hierzu über wenigstens eine Antenne 9, mit der Funksignale von einem Satelliten und/oder einem Rundfunksender erfasst werden. Alternativ oder ergänzend kann die Zentraleinheit 2 auch andere Fahrerassistenzaufgaben übernehmen, wie beispielsweise eine Klimaregelung oder eine Umfeldüberwachung. Ferner ist die Zentraleinheit 2 mit einem Datenträger 10 verbunden. In einer bevorzugten Ausführungsform kann auch eine weitere Bedieneinheit 11 zur Steuerung der Zentraleinheit 2 im Fahrzeug vorgesehen sein. Um verschiedene Funktionen der Zentraleinheit 2 auszuwählen, sind Bedienfelder in der Anzeigeeinheit 3 dargestellt, die in den folgenden Figuren erläutert werden. Berührt ein Benutzer eines dieser Bedienfelder, so wird die dem Bedienfeld zugeordnete Funktion der Zentraleinheit 2 von dieser ausgeführt. Dies kann beispielsweise die Eingabe eines Fahrziels zur Berechnung einer Fahrtroute zu diesem Fahrziel, die Wiedergabe eines auf dem Datenträger 10 gespiecherten Musiktitels oder die Auswahl eines Radiosenders zum Empfangen dieses Radiosenders über die Antenne 9 sein. Die Zentraleinheit 2 verfügt bevorzugt ferner über eine Schnittstelle zu einem Lautsprecher 12, über den akustische Signale, wie beispielsweise Fahranweisungen oder Musik, ausgegeben werden können.

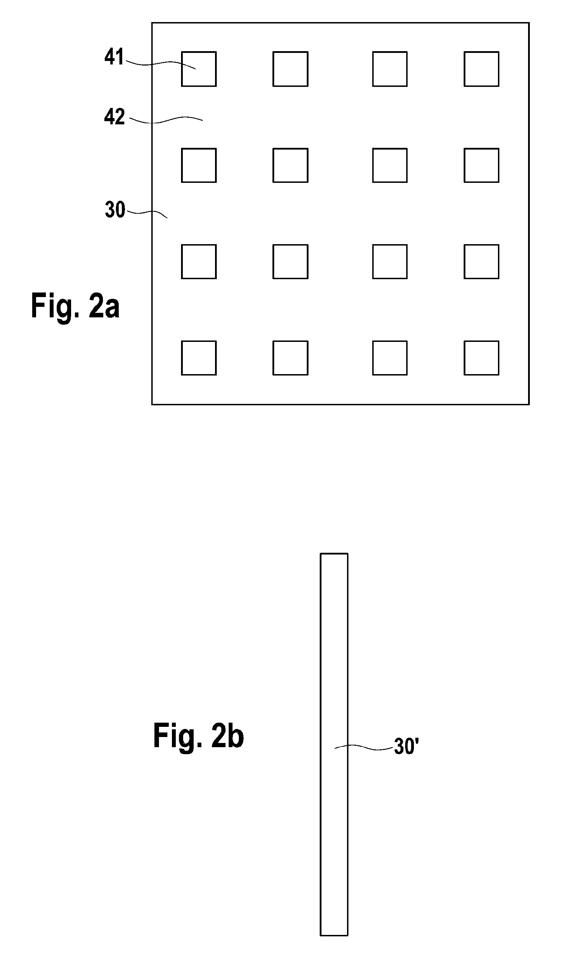

Anhand der Figuren 2 bis 4 ist die Anzeigeeinheit 3 in ihrer Funktionsweise im Detail dargestellt. Hierzu ist jeweils die Anzeigeeinheit in einer Frontansicht (30) und in einer Seitenansicht (30') jeweils im gleichen Zustand dargestellt. In der Figur 2 sind in der Anzeigeeinheit 3 jeweils Bedienfelder 41 dargestellt, von denen aus Gründen der Übersichtlichkeit nur eines mit einem Bezugszeichen versehen ist. Zwischen den Bedienfeldern sind Freiräume 42 vorhanden, bei deren Berührung keine Funktion ausgelöst wird. Würde eines der Bedienfelder 41 berührt, so würde die dem jeweiligen Bedienfeld zugeordnete Funktion ausgelöst. Bei dem Fall gemäß der Figur 2 befindet sich jedoch kein Bedienelement in einem Erfassungsbereich, der in der Figur 2 nicht dargestellten Erfassungseinrichtung 6. Daher werden alle Bedienfelder 41 jeweils mit einer Fläche in einer Basisgröße dargestellt, die in der Recheneinheit 5 abgelegt ist. Bei dem in der Figur 2 dargestellten Ausführungsbeispiel sind alle Bedienfelder in einer gleichen Größe dargestellt.

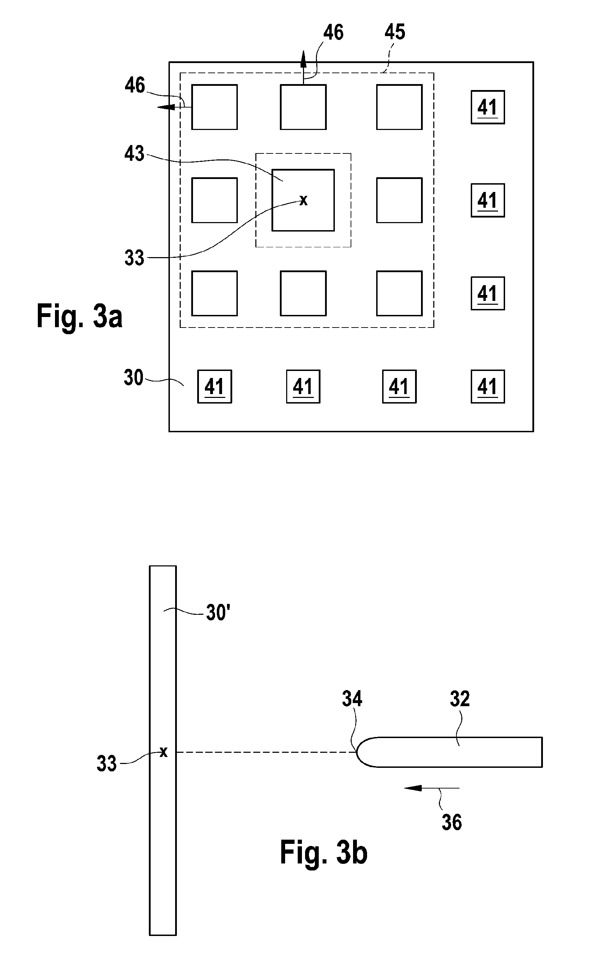

Bei der in der Figur 3 dargestellten Situation hat sich gegenüber der Figur 2 geändert, dass sich ein Bedienelement 32 der Oberfläche der Anzeigeeinheit 30 angenähert hat. Die Erfassungseinrichtung 6 hat einen Ort 33 einer größten Annäherung gegenüber der Anzeigeeinheit 30 ermittelt. Dieser Ort entspricht bevorzugt der orthogonalen Projektion desjenigen Punktes 34 des Bedienelements 32 auf die Anzeigefläche, der der Anzeigefläche 3 am Nächsten ist, hier also der Spitze des Bedienelements. Die Recheneinheit 5 hat nun ermittelt, dass der Ort der größten Annäherung im Bereich eines Bedienfeldes 43 liegt, wobei das Bedienfeld 43 nun größer dargestellt wird, als alle anderen Bedienfelder in der Anzeigeeinheit 30. Gemäß dem hier dargestellten Ausführungsbeispiel werden zudem diejenigen Bedienfelder, die in direkter Nachbarschaft zu dem Bedienfeld 43 liegen, und die durch eine gestrichelte Linie 45 hervorgehoben sind, zwar kleiner dargestellt als das Bedienfeld 43, jedoch größer als die übrigen Bedienfelder 41. Bevorzugt kann nun das Bedienfeld 43 auch in einer anderen Farbe, beispielsweise in orange dargestellt werden, während die anderen Bedienfelder in grün dargestellt werden. Zusätzlich zu einer Vergrößerung der Bedienfelder in dem Bereich 45 werden diese Bedienfelder auch geringfügig nach außen verschoben, d. h. der Mittelpunkt der Bedienfelder verschiebt sich im Bezug auf die Position der größten Annäherung 33 in Pfeilrichtung 46 nach außen auf einen Rand der Anzeigefläche der Anzeigeeinheit 30 hin.

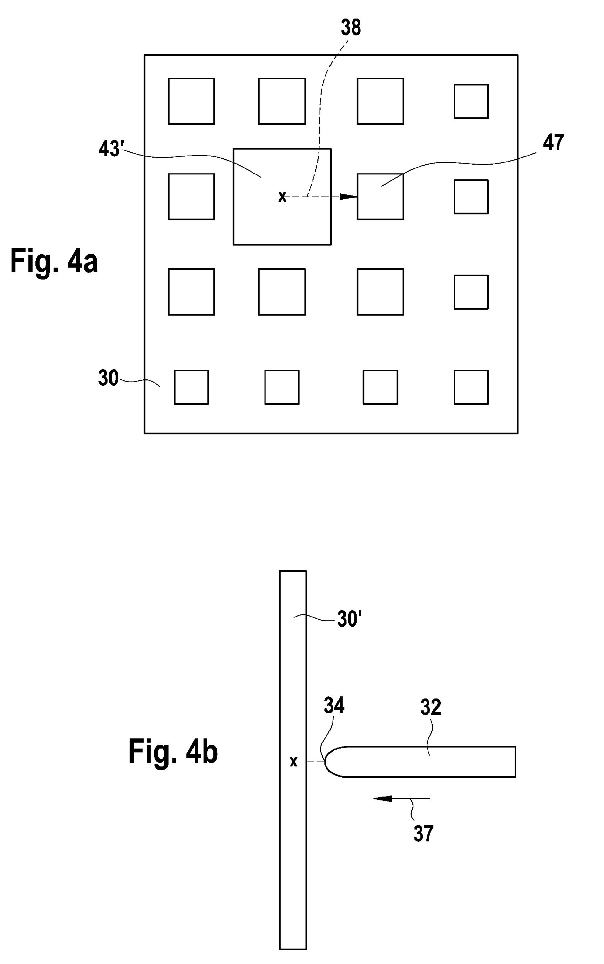

In der Figur 4 hat sich nun das Bedienelement 32 gemäß dem Pfeil 36 in der Figur 3 näher an die Anzeigeeinheit 30 angenähert. Die Größe des Bedienfeldes 43 hat sich auf die Größe des Bedienfeldes 43 noch weiter vergrößert. Wird nun die Fläche des Bedienfeldes 43' in einer weiteren Annäherung gemäß dem Pfeil 37 berührt, so wird eine in dem Feld 43'durch Text und/oder ein Symbol dargestellte Funktion ausgelöst und damit ausgeführt. Bei dieser Funktion kann es sich beispielsweise um die Eingabe eines Zeichens handeln, das in dem Bedienfeld 43' dargestellt wird. Jedoch kann in der Bedienfläche auch eine Funktion angegeben sein, wie beispielsweise eine Auswahl eines Fahrziels oder eine Einstellung eines Radiosenders, die nunmehr ausgeführt wird. Sollte ein Benutzer feststellen, dass er die in dem Bedienfeld 43' dargestellte Funktion nicht ausführen will, sei es dass er sich in der Annäherung geirrt hat oder er seinen Wunsch geändert hat, so kann der Benutzer zu einem benachbarten Bedienfeld wechseln, solange er das Bedienfeld 43' nicht in einem Bereich der Anzeigefläche berührt hat. Bewegt sich das Bedienelement 32 vor einer Berührung der Anzeigefläche in eine seitliche Richtung in Bezug auf die flächige Ausdehnung des Bedienfeldes, so bleibt das Bedienelement 43' ungeändert dargestellt, solange zumindest nicht der Rand des Bedienfeldes 43' erreicht wird. Bewegt ein Benutzer jedoch das Bedienelement 32 in eine Pfeilrichtung 38 über einen Rand des Bedienfeldes 43' hinaus zu einem benachbarten Bedienfeld 47, so wird bei Erreichen eines Randes des Bedienfeldes 47 dieses nunmehr als dasjenige Bedienfeld ausgewählt, das besonders groß im Vergleich zu den es umgebenden Bedeinfeldern dargestellt wird, entsprechend der Darstellung des Bedienelements 43' in der Figur 4. Gegebenenfalls werden auch die benachbarten Bedienelemente zu dem dann vergrößerten Bedienfeld 47 in entsprechender Weise auf die aus den Figuren 3 und 4 ersichtliche Zwischengröße vergrößert. Somit ist auch ein Wechsel einer Annäherung zwischen den einzelnen Bedienfeldern komfortabel möglich.

Bevor eine Auslösung einer einem Bedienfeld zugeordneten Funktion erfolgt ist, kann ein Benutzer zwischen beliebigen Bedienfeldern wechseln. In einer weiteren Ausführungsform ist es auch möglich, eine Auslösung der Funktion bereits bei einem Unterschreiten eines vorgegebenen Abstandes zu der Oberfläche der Anzeigeeinrichtung auszulösen, beispielsweise bei einem Unterschreiten eines Abstandes von 1 cm. Ist eine Funktion ausgelöst worden, so muss bei dieser Ausführungsform vor einer erneuten Auslösung einer darauf folgenden Funktion, beispielsweise in einem Untermenü, das Bedienelement 32 zunächst wieder von der Oberfläche der Anzeigeeinheit 30 entfernt werden. Danach erfolgt die Auswahl eines weiteren Bedienfeldes in gleicher Weise.

Als Bedienelement 32 kann ein Finger eines Benutzers verwendet werden. Ferner ist es auch möglich, Tastelemente Form eines Stiftes, z.B. aus Kunststoff, zu verwenden.

Bevorzugt ändert sich mit zunehmender Annäherung des Bedienelements 32 an die Oberfläche der Anzeigeeinheit die Farbe des vergrößerten Bedienelements 43, 43. Insbesondere kann eine farbliche Änderung dann ausgegeben werden, wenn das Bedienelement berührt wird. In einer bevorzugten Ausführungsform wird bei einem erfolgreichen Auslösen der dem Bedienfeld zugeordneten Funktion eine akustische Rückmeldung über den Lautsprecher 12 ausgegeben.

In einer weiteren Ausführungsform ist es auch möglich, zusätzliche Informationen zu einem der Bedienfelder auszugeben. Wird ein vorgegebener Abstand von beispielsweise 2 cm unterschritten, so können in einer ersten Ausführungsform, beispielsweise an einem unteren Rand der Anzeigevorrichtung oder in Form eines zusätzliche Fensters, das auf das Bedienfeld 43 zeigt, zusätzliche Informationen zu der dem Bedienfeld zugeordneten Funktion ausgegeben werden. In einer anderen Ausführungsform können ergänzend oder alternativ hierzu akustische Informationen zu dem Bedienfeld ausgegeben werden. Über eine akustische Rückmeldung der Bedeutung des Bedienfeldes ist es zudem möglich, die Anzeigeeinheit in der Weise blind zu bedienen, dass bei einer Annäherung die Funktion des Bedienfeldes ausgegeben wird, so dass ein Benutzer eine Information darüber erhält, welche Funktion er bei einer weiteren Annäherung an das Bedienfeld auslösen wird.

Ferner ist es auch dann möglich, zusätzliche Informationen auszugeben, wenn ein Benutzer den Finger für einige Zeit, beispielsweise zehn Sekunden, unentschlossen vor der Anzeigefläche positioniert oder mehrfach zwischen verschiedenen Bedienelementen wechselt. Die Zentraleinheit 2 weist hierzu eine Zeitschaltung 14 auf, die mit der Recheneinheit 5 verbunden ist. Die Zeitschaltung 14 dient dazu, die Dauer einer Annäherung zu überwachen. Wird eine vorgegebene Dauer der Annäherung zu einem Bedienfeld überschritten, beispielsweise eine Zeitspanne von drei Sekunden, so werden zusätzliche Informationen zu dem Bedienfeld über eine Lautsprecher 12 und/oder die Anzeigeeinheit 3 ausgegeben. Dies können beispielsweise Erläuterungen zu der in dem Bedienfeld dargestellten Funktion sein. Es kann aber auch der Funktionsname selbst noch einmal akustisch ausgegeben werden. Ferner ist es auch möglich, eine Information in einer anderen Sprache als der Sprache einer Beschriftung der Bedienfelder akustisch und/oder optisch auszugeben.

## Patentansprüche

1. Bedieneinheit mit einer Anzeigeeinheit zur Darstellung einer Bedienfläche mit mehren, in der Anzeigeeinheit dargestellten Bedienfeldern und mit einer Erfassungseinheit zur Erfassung einer Annäherung eines Bedienelements und zur örtlichen Zuordnung der Annäherung zu einem der Bedienfelder, **dadurch gekennzeichnet, dass** dasjenige Bedienfeld (43, 43'), das der Annäherung zugeordnet wird, gegenüber den Bedienfeldern (41, 45, 47) in seiner Umgebung vergrößert in der Anzeigeeinheit (3, 30) dargestellt wird.

2. Bedieneinheit nach Anspruch 1, **gekennzeichnet durch** eine Zeitschaltung (14) zur Überwachung einer Dauer einer Annäherung an ein Bedienfeld (43, 43') unterhalb eines vorgegebenen Abstands, wobei eine ergänzende Information zu dem Bedienfeld bei einem Überschreiten einer vorgegebenen Dauer der Annäherung ausgegeben wird.

3. Bedieneinheit nach einem der vorhergehenden Ansprüche, **dadurch gekennzeichnet, dass** eine dem Bedienfeld (43, 43') zugeordnete Funktion bei einer weiteren Annäherung oder bei einer Berührung der Anzeigeeinheit (3, 30) auf einer dem Bedienfeld (43, 43') zugeordneten Fläche ausgelöst wird.

4. Verfahren zur Darstellung eines Tastenfeldes in einer Berührungs- und/oder annäherungsempfindlichen Anzeigeeinheit, wobei eine Annäherung eines Bedienelements räumlich einer Position auf der Anzeigeeinheit zugeordnet wird, wobei in der Anzeigeeinheit mehrere Bedienfelder dargestellt werden, **dadurch gekennzeichnet, dass** dasjenige Bedienfeld, dem die Position der Annäherung zugeordnet wird, vergrößert gegenüber den benachbarten Bedienfeldern in der Anzeigeeinheit dargestellt wird.

5. Verfahren nach Anspruch 4, **dadurch gekennzeichnet, dass** die Darstellung des vergrößerten Bedienfelds bei einer weiteren Annäherung weiter vergrößert wird.

6. Verfahren nach einem der Ansprüche 4 bis 5, **dadurch gekennzeichnet, dass** Bedienfelder in der Umgebung des vergrößerten Bedienfeldes kleiner als das vergrößerte Bedienfeld, jedoch vergrößert gegenüber übrigen Bedienfeldern in der Anzeigeeinheit dargestellt werden.

7. Verfahren nach einem der Ansprüche 4 bis 6, **dadurch gekennzeichnet, dass** Bedienfelder in Nachbarschaft zu dem vergrößert dargestellten Bedienfeld in der Anzeigefläche verschoben werden.

8. Verfahren nach einem der Ansprüche 4 bis 7, **dadurch gekennzeichnet, dass** bei einer weiteren Annäherung unterhalb eines vorgegebenen Abstands oder bei einer Berührung des Bedienfelds in einem vorgegebenen Bereich der Anzeigefläche die dem Bedienfeld zugeordnete Funktion ausgelöst wird.

9. Verfahren nach einem der Ansprüche 4 bis 8, **dadurch gekennzeichnet, dass** eine Farbe eines Bedienfelds in Abhängigkeit von einer Annäherung verändert wird.
